# EUROPÄISCHE PATENTANMELDUNG

(11) **EP 1 189 163 A2**
(43) Veröffentlichungstag der Anmeldung: **20.03.2002**
(21) Anmeldenummer: 01121112.5
(22) Anmeldetag: 03.09.2001
(51) Int. Cl.: G06F 17/60

(54) **Verfahren und System zum Management von Logistikvorgängen und zur Sendungsverfolgung**

(30) Priorität: 05.09.2000 DE 10043752
(71) Anmelder: ESG Elektroniksystem-und Logistik-Gesellschaft mit beschränkter Haftung, D-81675 München (DE)
(72) Erfinder: Fischer, Dietmar, Dr., Unterhaching (DE); Seubold, Gabriele, 86836 Klosterlechfeld (DE)
(74) Vertreter: Jordan, Volker, Dr.

(57) **Zusammenfassung**

Die Erfindung betrifft ein Verfahren und ein System zum Management von Zwischengliedern einer Logistikkette stattfindenden Logistikvorgängen und zur eine Packstückverfolgung und gewünschtenfalls eine Objektverfolgung umfassenden Sendungsverfolgung entlang der Logistikkette. Erfindungsgemäß ist die Verwendung von wiederholt beschreibbaren RFID-Transpondern vorgesehen, die mittels zugeordneten RFID-Schreib-/Lesegeräten ausgelesen und beschrieben werden. Auf Grundlage von Avisierungsdaten und aus einem jeweiligen RFID-Transponder ausgelesenen Daten werden Logistikvorgänge bestätigt und quittiert.

## Beschreibung

Die Erfindung betrifft ein Verfahren zum Management von zwischen Gliedern einer Logistikkette stattfindenden Logistikvorgängen und zur Sendungsverfolgung entlang der Logistikkette.

Dem eingangs genannten Verfahren entsprechende Dienstleistungen und zur Realisierung des Verfahrens dienende EDV-Systeme werden beispielsweise von der Firma EURO-LOG GmbH angeboten. So stellt ein unter dem Namen TRANSPO-TRACK laufender Tracking & Tracing Service Sendungsdaten und Informationen über den aktuellen Verbleib von Packstücken der Sendung während des Transports entlang der gesamten Logistikkette vorauseilend zur Verfügung und es werden Logistikprozesse gesteuert und kontrolliert. Zur Identifizierung der Packstücke dienen Barcode-Etiketten, die unter der Steuerung des TRANSPO-TRACK-Systems ausgedruckt und unter Einsatz von mit dem TRANSPO-TRACK-System in Datenkommunikationsverbindung stehenden Barcode-Lesegeräte gelesen werden. Es wird eine funktechnischeAnbindung von mobilen Barcode-Lesegeräten, insbesondere von "LKW-Scannern" über das GSM-Netz unterstützt. Unter dem Namen TRANSPO-FLEET wird eine Sendungsverfolgung in Kombination mit einer Lokalisierung auf Grundlage des GPS-Systems angeboten.

Im Rahmen eines Feldversuchs wurde vom Deutschen Paketdienst DPD der Einsatz der sogenannten TAG-Technologie im Rahmen des geschlossenen Logistik-Systems des Deutschen Paketdienstes getestet. Hierbei wurden als Ersatz für herkömmliche, auf dem jeweiligen Packstück anzubringende Paketscheine sogenannte TAG-Aufkleber eingesetzt. Bei den auch als TAG-Transponder oder RFID-Transponder (RFID = Radio Frequency Identification) bezeichenbaren TAG-Etiketten, die in dem Feldversuch eingesetzt wurden, handelte es sich um Einmalgebrauch-Transponder des Nur-Lesen-Typs, in die eine das Packstück identifizierende Kennung fest einprogrammiert war. In Pressemitteilungen des Deutschen Paketdienstes wurde in Erwägung gezogen, mittels der TAG- oder RFID-Transponder mehr Daten als per Barcode möglich sendungsbegleitend zu übermitteln, beispielsweise Informationen zum Haftungsübergang, exakte Ein- und Ausgangszeiten, Angaben über Schäden.

Neben nur einmal beschreibbaren Transpondern, die im Fachgebiet als READ ONLY Transponder bekannt sind, existieren auch wiederbeschreibbare RFID-Transponder, die im Fachgebiet als READ / WRITE - Transponder bekannt sind. Es wird hierzu auf Veröffentlichungen des internationalen AIM-Verbands verwiesen, insbesondere auf die einen Überblick über RFID-Systeme gebende Veröffentlichung "Draft Paper on the Characteristics of RFID-Systems", Juli 2000, AIM Frequency Forums, AIM FF 2000:001, Ver. 1.0.

Die Erfindung trachtet, von Barcode-Kennzeichnungen bekannte Prinzipien nicht einfach nur auf die RFID-Technologie bei deren Anwendung im Rahmen des genannten Verfahrens zu übertragen, sondern die Wieder-Beschreibbarkeit von wiederholt beschreibbaren RFID-Transpondern in geschickter Weise auszunutzen, um das Verfahren besonders leistungsfähig und flexibel zu machen. Insbesondere soll das Verfahren auf Basis eines offenen Systems realisierbar sein, bei dem vorzugsweise jedes Glied der Logistikkette seine eigenen Idnetifizierungen und dergleichen verwenden kann.

Die Erfindung stellt bereit ein Verfahren zum Management von zwischen Gliedern einer Logistikkette stattfindenden Logistikvorgängen und zur eine Packstückverfolgung und gewünschtenfalls eine Objektverfolgung umfassenden Sendungsverfolgung entlang der Logistikkette, umfassend:
a) Bereitstellen, in Zuordnung zu wenigstens einem Glied der Logistikkette, wenigstens eines RFID-Schreib-/Lesegeräts zum Auslesen und Beschreiben von zugeordneten RFID-Transpondern;
b) Bereitstellen wenigstens eines wiederholt beschreibbaren RFID-Transponders in Zuordnung zu wenigstens einem Packstück oder/und zu wenigstens einem Objekt des Packstücks;
c) in Zuordnung zu einem ersten Glied der Logistikkette oder/und zu einer dem ersten Glied übergeordneten Instanz oder in gemeinsamer Zuordnung zum ersten und zweiten Glied der Logistikkette:
   ca) Generieren von dem Packstück bzw. dem Objekt zugeordneten Daten umfassend 1) Packstück- oder/und Objektdaten (im Folgenden Sendungsdaten genannt), die das Packstück bzw. das Objekt identifizieren, 2) gewünschtenfalls Statusdaten, die einen momentanen Logistikstatus des Packstücks bzw. des Objekts angeben, und gewünschtenfalls 3) Logistikkettendaten, die von der Logistikkette wenigstens das letzte Glied und vorzugsweise auch das auf das erste Glied folgende nächste Glied identifizieren, und 4) gewünschtenfalls andere Daten, die entlang der Logistikkette mitzuführen sind;
   cb) Abspeichern wenigstens 1) der Sendungsdaten und, sofern vorhanden, 2) der anderen Daten in dem dem Packstück bzw. dem Objekt zugeordneten RFID-Transponder;
   cc) Aufnehmen wenigstens 1) der Sendungsdaten, und, sofern vorhanden, 2) der Statusdaten und, sofern vorhanden, 3) der Logistikkettendaten in einen Datenbestand eines Datenverarbeitungssystems;
   cd) Übergeben, durch das erste Glied, des Packstücks bzw. des Objekts an das nächste Glied der Logistikkette;
   d) in Zuordnung zu jedem folgenden Glied der Logistikkette mit Ausnahme des letzten Glieds:
      da) Übernehmen, durch das folgende Glied, des Packstücks bzw. des Objekts vom vorangehenden Glied der Logistikkette;
      db) Auslesen wenigstens von Sendungsdaten aus dem RFID-Transponder;
      dc) Generieren von dem Packstück bzw. dem Objekt zugeordneten Daten umfassend 1) Quittierungsdaten, die die Übernahme des Packstücks bzw. des Objekts quittieren, 2) gewünschtenfalls Statusdaten, die einen momentanen Logistikstatus des Packstücks bzw. des Objekts angeben, 3) gewünschtenfalls eigene Packstück- oder/und Objektdaten (im Folgenden eigene Sendungsdaten genannt), die das Packstück bzw. das Objekt identifizieren, 4) gewünschtenfalls Logistikkettendaten, die von der Logistikkette wenigstens das nächste Glied identifizieren, und 5) gewünschtenfalls andere Daten, die entlang der Logistikkette mitzuführen sind;
      de) Abspeichern wenigstens, sofern vorhanden, 1) der eigenen Sendungsdaten und, sofern vorhanden, 2) der anderen Daten in dem dem Packstück bzw. dem Objekt zugeordneten RFID-Transponder;
      df) Aufnehmen wenigstens 1) der Quittierungsdaten und, sofern vorhanden, 2) der Statusdaten und, sofern vorhanden, 3) der eigenen Sendungsdaten und, sofern vorhanden, 4) der Logistikkettendaten in den Datenbestand des Datenverarbeitungssystems;
      dg) Übergeben, durch das betreffende Glied, des Packstücks bzw.
      des Objekts an das nächste Glied der Logistikkette;
   e) in Zuordnung zum letzten Glied der Logistikkette oder in gemeinsamer Zuordnung zum letzen und vorletzten Glied der Logistikkette:
      ea) Übernehmen, durch das letzte Glied, des Packstücks bzw. des Objekts vom vorletzten Glied der Logistikkette;
      eb) Auslesen wenigstens von Sendungsdaten aus dem RFID-Transponder;
      ec) Generieren von dem Packstück bzw. dem Objekt zugeordneten Daten umfassend 1) Quittierungsdaten, die die Übernahme des Packstücks bzw. des Objekts quittieren, und 2) gewünschtenfalls Statusdaten, die einen momentanen Logistikstatus des Packstücks bzw. des Objekts angeben;
      ed) Aufnehmen wenigstens 1) der Quittierungsdaten und, sofern vorhanden, 2) der Statusdaten in den Datenbestand des Datenverarbeitungssystems;
   f) durch das Datenverarbeitungssystem:
      fa) Halten der 1) Sendungsdaten, 2) Quittierungsdaten, 3) gegebenenfalls Statusdaten und 4) gegebenenfalls Logistikkettendaten;
      fb) sofern verschiedene Glieder der Logistikkette jeweils eigene Sendungsdaten verwenden: Zuordnen von sich auf das gleiche Packstück bzw. das gleiche Objekt beziehenden Sendungsdaten zueinander;
      fc) auf Grundlage wenigstens der Sendungsdaten: Bereitstellen von Avisierungsdaten, die wenigstens ein Packstück oder/und wenigstens ein Objekt des Packstücks identifizieren und wenigstens einen sich hierauf beziehenden Logistikvorgang ankündigen, für wenigstens ein Glied der Logistikkette;
      fd) auf Grundlage der Sendungsdaten sowie auf Grundlage der Quittierungsdaten oder/und der Statusdaten: 1) Bereitstellen von Bestätigungsdaten, die wenigstens ein Packstück oder/und wenigstens ein Objekt des Packstücks identifizieren und für wenigstens einen sich hierauf beziehenden Logistikvorgang bestätigen, dass dieser erfolgt ist, wenigstens für das erste Glied der Logistikkette oder/und die übergeordnete Instanz. Die vorstehende Gliederung der Merkmale und Schritte des erfindungsgemäßen Verfahrens nach einfachen und doppelten kleinen Buchstaben und nach Zahlen, sowie die Reihenfolge, in der die Verfahrensmerkmale und Verfahrensschritte aufgeführt sind, gibt nicht zwingend eine bestimmte Reihenfolge der Durchführung der Verfahrensschritte an. Insbesondere können im Rahmen der Lehre der Erfindung einzelne Verfahrensschritte, soweit sinnvoll, auch wiederholt durchgeführt werden und es können die Verfahrensschritte ineinander verzahnt sein. Beispielsweise können Statusdaten wiederholt übermittelt werden, etwa beim Laden eines Packstücks auf einen LKW, beim Umladen des Packstücks vom LKW auf einen Güterwagon, beim Entladen des Güterwagons, usw.

Glieder der Logistikkette sind beispielsweise ein Absender, ein oder mehrere Transporteure und ein Empfänger. Vorzugsweise haben wenigstens der Transporteur bzw. die Transporteure RFID-Schreib-/Lesegeräte zum Beschreiben und Auslesen der RFID-Transponder, wobei es sich anbietet, das RFID-Schreib-/Lesegerät an Bord eines Tranportmittels, etwa eines Lastkraftwagens, zu installieren. Insbesondere dem Absender kann eine übergeordnete Instanz übergeordnet sein, die eventuell zu übergebende Packstücke bzw. Objekte bestimmt und diese identifizierende Sendungsdaten vorgibt. Bei der übergeordneten Instanz kann es sich auch um den Empfänger handeln. Genauso gut ist es mögllich, dass die übergeordnete Instanz auch dem Empfänger und ggf. wenigstens einem der Transporteure übergeordnet ist. Sofern der Absender kein eigenes RFID-Schreib-/Lesegerät hat, können die Sendungsdaten und ggf. die anderen Daten beim Absender unter Einsatz des RFID-Schreib-/Lesegeräts des ersten Transporteurs abgespeichert werden (gemeinsame Zuordnung des Abspeicherns zum ersten und zweiten Glied der Logistikkette). In entsprechender Weise kann, wenn das letzte Glied der Logistikkette, also etwa der Empfänger, kein eigenes RFID-Schreib-/Lesegerät zur Verfügung hat, das Auslesen wenigstens der Sendungsdaten aus dem jeweiligen RFID-Transponder unter Verwendung eines RFID-Schreib-/Lesegeräts des letzten Transporteurs erfolgen (gemeinsame Zuordnung des Auslesevorgangs und in entsprechender Weise ggf. der Generation von Quittierungsdaten zum letzten und vorletzten Glied der Logistikkette). Es ist beispielsweise möglich, dass der letzte Transporteur der Logistikkette sich den Empfang des Packstücks bzw. des Objekts durch den Empfänger elektronisch oder auf Papier quittieren lässt und dann entsprechende Quittierungsdaten in den Datenbestand stellt.

Soweit ein Glied der Logistikkette keine Daten in den RFID-Transpondern abspeichert, ist es im Rahmen der Lehre der Erfindung selbstverständlich auch möglich, dass dieses Glied der Logistikkette ein reines RFID-Lesegerät (ohne Schreibfunktionalität) verwendet. Ferner liegt es im Rahmen der Lehre der Erfindung, dass wenigstens ein Glied der Logistikkette Barcode-Identifizierungen verwendet und auf die im RFID-Transponder niedergelegten Daten nicht zugreift. Insbesondere können RFID-Transponder in Etikettenform mit einer aufgedruckten Barcode-Identifizierung und ggf. auch einer aufgedruckten Klarschrift-Identifizierung verwendet werden. Hierzu kann im Rahmen des erfindungsgemäßen Verfahrens wenigstens ein entsprechendes Barcode-Lesegerät oder/und wenigstens ein entsprechendes Klarschrift-Lesegerät bereitgestellt werden. Ein nicht auf die im RFID-Transponder niedergelegten Daten zugreifendes und keine Daten im RFID-Transponder abspeicherndes Glied der Logistikkette braucht selbstverständlich überhaupt kein RFID-Schreib-/Lesegerät zur Verfügung haben.

Vorzugsweise stellt das Datenverarbeitungssystem auf Grundlage von vom Datenverarbeitungssystem gehaltenen Daten selbsttätig oder/und in Antwort auf eine vermittels technischer Datenkommunikation (beispielsweise über das Internet) erfolgende Anfrage Sendungsverfolgungsdaten bereit, die einen momentanen Logistikstatus wenigstens eines Packstücks oder/und wenigstens eines Objekts angeben.

Zu den Begriffen "Sendung" und "Sendungsverfolgung" ist darauf hinzuweisen, dass in einer strengen Terminologie der Begriff "Sendung" logische (virtuelle) Einheiten umfasst, deren Bestandteile, nämlich Packstücke, eventuell auch auf verschiedenen Wegen bzw. durch Einsatz verschiedener Logistikkette von einem Ausgangspunkt zu einem Endpunkt überführt werden. Im Fachgebiet wird aber allgemein von einer "Sendungsverfolgung" gesprochen, wenn eigentlich eine "Packstückverfolgung" gemeint ist. Insoweit aber für alle Packstücke einer logischen Sendung jeweils eine Packstückverfolgung realisiert wird, ist damit zugleich auch eine "Sendungsverfolgung" gegeben, wenn man die "Packstückverfolgungsdaten" entsprechend zusammenführt. Insoweit kann man auf Grundlage einer weniger strengen Terminologie ohne Weiteres von "Sendungsverfolgungsdaten" sprechen, wenn es eigentlich um die Verfolgung eines "Packstücks" oder eines "Objekts" geht.

Betreffend die Avisierung bzw. Ankündigung wenigstens eines Logistikvorgangs können von dem Datenverarbeitungssystem einem Glied der Logistikkette (im Folgenden das erstgenannte Glied) ein (jeweiliges) Objekt bzw. ein (jeweiliges) Packstück identifizierende Identifikationsdaten bereitgestellt werden, die die Sendungsdaten wenigstens eines vorangehenden Glieds oder/und der übergeordneten Instanz sowie gewünschtenfalls eine dieses vorangehende Glied bzw. die übergeordnete Instanz identifizierende Identifikation umfassen können. Insbesondere bietet es sich an, wenigstens die Sendungsdaten des ersten Glieds oder - sofern vorhanden - der übergeordneten Instanz sowie ggf. eine dieses erste Glied bzw. die übergeordnete Instanz identifizierende Identifikation zu verwenden. In Zuordnung zu dem erstgenannten Glied (ggf. in gemeinsamer Zuordnung zu dem erstgenannten Glied und dem unmittelbar vorangehenden Glied) werden aus wenigstens einem RFID-Transponder Sendungsdaten ausgelesen und mit den Identifikationsdaten verglichen. In dem Fall, dass die ausgelesenen Sendungsdaten den Identifikationsdaten entsprechen, werden in Bezug auf das dem RFID-Transponder zugeordnete Packstück bzw. Objekt Quittierungsdaten und gewünschtenfalls eigene Sendungsdaten generiert.

Beispielsweise kann dass erste Glied oder die übergeordnete Instanz, die die Identifikation [A] aufweist, ein Packstück bzw. Objekt identifizierende Sendungsdaten, nämlich die Identifikation [I] generieren. In den Datenbestand des Datenverarbeitungssystems werden dann die Daten [Al] aufgenommen und die Daten [Al] werden überdies in einem dem Packstück bzw. Objekt zugeordneten RFID-Transponder abgespeichert. Bei der Identifikation [I] kann es sich zweckmäßig um eine einen Vertriebsauftrag kennzeichnende Auftragsnummer oder dergleichen handeln.

Dem zweiten, die Identifikation [B] aufweisende Glied werden dann durch das DatenverarbeitungssystemAvisierungsdaten, beispielsweiseumfassend die Daten [Al] bereitgestellt. Sollte die Avisierung aus irgendeinem Grund unterbleiben, findet das zweite Glied die Daten [Al] jedenfalls auf dem RFID-Transponder. Das zweite Glied kann dann, wenn gewünscht oder zweckmäßig, eigene Sendungsdaten, etwa die eigene Identifikation [I'], generieren, die dann im Datenbestand des Datenverarbeitungssystems aufgenommen wird. Beispielsweise gibt das zweite Glied eine Meldung der Form [BI' =AI] ab. Überdies werden die Daten [BI'] auf dem RFID-Transponder abgespeichert. Als Identifikation [I'] kann zweckmäßig eine einen Speditionsauftrag kennzeichnende Auftragsnummer verwendet werden.

Einem dritten Glied der Logistikkette, das die Identifikation [C] aufweist, könnten dann Avisierungsdaten beispielsweise umfassend die Daten [Al] oder/und die Daten [Bl'] bereitgestellt werden. Handelt es sich bei dem dritten Glied nicht um das letzte Glied, sondern beispielsweise um einen weiteren Transporteur, so könnte das dritte Glied, je nach Zweckmäßigkeit, eine eigene Identifikation [I"] generieren, worauf entsprechende Daten in den Datenbestand aufgenommen und auf dem RFID-Transponder abgespeichert werden.

Die Statusdaten (Logistikstatusdaten) des Packstücks bzw. des Objekts können verschiedenste Zustände des Packstücks oder/und des Objekts oder/und eines zugeordneten Transportmittels betreffen, etwa einen Transportzustand des Packstücks bzw. des Objekts oder/und einen Fortbewegungszustand des Transportmittels. Insbesondere ist daran gedacht, dass der Logistikstatus des Packstücks bzw. des Objekts umfasst:
- eine Übergabebestätigung eines Glieds der Logistikkette, die bestätigt, dass das Packstück bzw. das Objekt an das nächste Glied der Logistikkette übergeben wurde, oder/und
- eine Ladezustandsangabe, die angibt, ob das Packstück bzw. das Objekt auf ein Transportmittel geladen oder von diesem entladen wurde, oder/und
- eine Lokalisierungsangabe, die angibt, wo sich das Packstück bzw. das Objekt bzw. ein zugeordnetes Transportmittel momentan befindet.

Ferner können die Statusdaten angeben, ob ein Packstück bzw. ein Objekt beschädigt ist, ob das Packstück bzw. dessen Inhalt vollständig ist, usw.

Die anderen, entlang der Logistikkette ggf. mitzuführenden Daten können sich beispielsweise auf die Haltbarkeit eines Objekts bzw. Inhalts eines Packstücks, auf einen Haftungsübergang, auf besondere Vorgänge während des Transports bzw. des Umschlags (etwa Beschädigungen) usw. beziehen.

Betreffend die die Übernahme der Sendung bzw. des Objekts quittierenden Quittierungsdaten ist darauf hinzuweisen, dass diese insbesondere einen Gefahrenübergang (etwa eine Übernahme eines Packstücks durch einen Transporteur) dokumentieren.

Insbesondere (aber nicht ausschließlich) für eine Objektverfolgung ist es zweckmäßig, wenn für wenigstens ein Objekt der diesem Objekt zugeordnete RFID-Transponder in dieses Objekt integriert ist. Ferner kann für wenigstens ein Packstück der diesem Packstück zugeordnete RFID-Transponder in ein dem Packstück zugeordnetes Lademittel, vorzugsweise in einen das Packstück aufnehmenden Behälter, integriert sein. Eine weitere Möglichkeit ist, dass in Klebeetiketten integrierte RFID-Transponder verwendet werden. Die Klebeetiketten können zusätzlich Barcode-Indentifizierungen oder/und Klarschrift-Identifizierungen aufweisen.

Vorzugsweise wird eine Ladehierarchie unterstützt, bei der eine Mehrzahl von Einheiten einer niedrigeren Ladehierarchie eine Einheit einer höheren Ladehierarchie bildet, wobei den Einheiten niedrigerer Ladehierarchie jeweils gesonderte RFID-Transponder zugeordnet sein können, die individuell im Sinne eines Auslesens oder/und Beschreibens ansprechbar sind, und wobei der Einheit höherer Ladehierarchie zusätzlich ein eigener RFID-Transponder zugeordnet sein kann, der individuell im Sinne eines Auslesens oder/und Beschreibens ansprechbar ist.

Beispielsweise kann ein Packstück mehrere Objekte enthalten, wobei von den Objekten des jeweiligen Packstücks mehreren jeweils ein gesonderter RFID-Transponder zugeordnet ist, die individuell im Sinne eines Auslesens oder/und Beschreibens ansprechbar sind, wobei vorzugsweise dem die Objekte enthaltenden Packstück als Ganzem zusätzlich ein eigener RFID-Transponder zugeordnet ist, der individuell im Sinne eines Auslesens oder/und Beschreibens ansprechbar ist.

Neben der hierarchisch niedrigsten Ladehierarchie "Objekt" (oder "Artikel") und der Ladehierarchie "Packstück" wird bevorzugt wenigstens eine weitere Ladehierarchie unterstützt, die hierarchisch zwischen der Ladehierarchie "Objekt" und der Ladehierarchie "Packstück" liegt. Ferner ist es bevorzugt, dass neben der hierarchisch niedrigsten Ladehierarchie "Objekt" (oder "Artikel") und der Ladehierarchie "Packstück" wenigstens eine weitere Ladehierarchie unterstützt wird, die hierarchisch über der Ladehierarchie "Packstück" liegt. In Betracht kommen beispielsweise die Ladehierarchien "Palette", "Container" und "Fahrzeug".

Im Rahmen des erfindungsgemäßen Verfahrens kann es zu den verschiedensten Datenflüssen kommen. Beispielsweise können die RFID-Schreib-Lesegeräte aus RFID-Transpondern ausgelesene Daten oder/und auf Grundlage dieser Daten generierte Daten per technischer (insbesondere elektronischer) Datenkommunikation an das Datenverarbeitungssystem übermitteln bzw. per technischer (insbesondere elektronischer) Datenkommunikation von dem Datenverarbeitungssystem in RFID-Transponder zu schreibende Daten empfangen.

Das Datenverarbeitungssystem kann ein Netz von Datenverarbeitungsanlagen umfassen. Nach einer bevorzugten Konfiguration umfasst das Datenverarbeitungssystem eine zentrale Datenverarbeitungsanlage und vorzugsweise eine Mehrzahl von lokalen, einem jeweiligen Glied der Logistikkette zugeordneten Datenverarbeitungsanlagen. Der Datenbestand wird vorzugsweise von der zentralen Datenverarbeitungsanlage gehalten, wobei die in den Datenbestand aufzunehmenden Daten vermittels technischer (insbesondere elektronischer) Datenkommunikation an die zentrale Datenverarbeitungsanlage übermittelt werden und von dieser empfangen werden.

Wenigstens ein Teil der an die zentrale Datenverarbeitungsanlage übermittelten Daten kann von wenigstens einer lokalen Datenverarbeitungsanlage, die mit wenigstens einem RFID-Schreib-/Lesegerät in Datenkommunikationsverbindung steht, an die zentrale Datenverarbeitungsanlage übermittelt werden und von dieser empfangen werden. Im Rahmen des erfindungsgemäßen Verfahrens kann auch vorgesehen sein, dass wenigstens ein Teil der Daten von wenigstens einem mit der zentralen Datenverarbeitungsanlage in Datenkommunikationsverbindung stehenden RFID-Schreib-/Lesegerät unmittelbar an die zentrale Datenverarbeitungsanlage übermittelt und von dieser empfangen wird.

Die zentrale Datenverarbeitungsanlage kann die Avisierungsdaten, die Bestätigungsdaten und ggf. die Sendungsverfolgungsdaten vermittels technischer Datenkommunikation (insbesondere elektronischer Datenkommunikation) an eine lokale Datenverarbeitungsanlage oder eine lokale Informationseinheit übermitteln, die diese Daten empfängt und ggf. anzeigt oder/und ausdruckt.

Das erfindungsgemäße Verfahren wird bevorzugt vollständig oder weitgehend automatisiert durchgeführt. Insbesondere können von den Generierungsschritten ca), dc), ec), den Abspeicherschritten cb), de), den ggf. eine Datenübermittlung und einen Datenempfang umfassenden Aufnahmeschritten cc), df), ed) und den Ausleseschritten db), eb) wenigstens einige, vorzugsweise alle automatisiert durchgeführt werden. Die Auslese- und Abspeicherschritte können dabei erforderlichenfalls unter manueller Herstellung einer räumlichen Beziehung zwischen einem Schreib-/Lesegerät und einem betreffenden RFID-Transponder entsprechend funktechnischen Spezifikationen derselben durchgeführt werden. Auch die Übergabe und Annahme des jeweiligen Packstücks bzw. Objekts kann automatisiert durchgeführt werden, etwa durch Einsatz entsprechender Robotertechnik.

Ferner werden bevorzugt der Zuordnungsschritt fb), die Bereitstellungsschritte fc), fd) und die ggf. eine Datenübermittlung und einen Datenempfang umfassende Bereitstellung von Sendungsverfolgungsdaten automatisiert durchgeführt.

Nach einer vorteilhaften Weiterbildung der erfindungsgemäßen Verfahrens vergleicht das Datenverarbeitungssystem automatisiert vorausgehend generierte, geplante Logistikvorgänge entlang der Logistikkette repräsentierende Soll-Daten und einen tatsächlichen Logistikzustand und tatsächlich erfolgende Logistikvorgänge (etwa Transportvorgänge, Umschlagvorgänge und dergleichen) repräsentierende Ist-Daten. Es kann vorgesehen sein, dass im Falle einer eine vorgegebene Toleranzschwelle übersteigenden Abweichung zwischen den Soll-Daten und den Ist-Daten automatisiert eine Alarmmeldung generiert oder/und automatisiert eine Abhilfemaßnahme vorgeschlagen oder iniziiert wird.

Es wurde schon darauf hingewiesen, dass das Verfahren so ausgebildet sein kann, dass Barcode-Identifizierungen unterstützt werden. Hierdurch wird die Integration herkömmlicher Systeme und Verfahren in das erfindungsgemäße Verfahren (und das erfindungsgemäße System, siehe unten) erleichtert.

Nach einem anderen Aspekt wird vorgeschlagen, einen einem Packstück oder einem Objekt zugeordneten RFID-Transponder auf spezielle Weise weiter zu verwenden, und zwar durch das letzte Glied einer nach dem erfindungsgemäßen Verfahren gemanagten Logistikkette für das Management einer weiteren Logistikkette in Bezug auf das gleiche Packstück oder das gleiche Objekt. Dabei erfolgt das Management der weiteren Logistikkette ebenfalls nach dem erfindungsgemäßem Verfahren und das letzte Glied der erstgenannten Logistikkette ist das erste Glied der weiteren Logistikkette.

Nach einem weiteren Aspekt wird vorgeschlagen, den einem Packstück oder einem Objekt zugeordneten RFID-Transponder für Lagerhaltungszwecke in Bezug auf das gleiche Packstück oder das gleiche Objekt zu verwenden, und zwar durch ein Glied, ggf. das letzte Glied einer nach dem erfindungsgemäßen Verfahren gemanagten Logistikkette, eventuell im Anschluss an die vorstehend genannte Verwendung oder dieser vorausgehend.

Nach noch einem Aspekt wird vorgeschlagen, einen einem Objekt zugeordneten, in dieses Objekt integrierten RFID-Transponder durch das erste oder letzte Glied oder durch die übergeordnete Instanz einer nach dem erfindungsgemäßen Verfahren gemanagten Logistikkette für die Überwachung des Lebenszyklus des Objekts zu verwenden, vorzugsweise im Hinblick auf Qualitätsmanagement oder/und Garantiemanagement. Diese Verwendung kann sich an eine der vorstehend erwähnten Verwendungen anschließen oder dazu parallel erfolgen.

Die Erfindung betrifft ferner ein System zum Mangement von zwischen Gliedern einer Logistikkette stattfindenden Logistikvorgängen und zur eine Packstückverfolgung und gewünschtenfalls eine Objektverfolgung umfassenden Sendungsverfolgung entlang der Logistikkette nach dem erfindungsgemäßen Verfahren. Das erfindungsgemäße System umfasst:
- ein wenigstens eine Datenverarbeitungsanlage umfassendes Datenverarbeitungssystem;
- wenigstens ein RFID-Schreib-/Lesegerät, das mit dem Datenverarbeitungssystem in Datenkommunikationsverbindung steht;
- wenigstens einen dem RFID-Schreib-/Lesegerät zugeordneten RFID-Transponder, der mittels dem RFID-Schreib-/Lesegerät auslesbar und beschreibbar ist;
- dem Datenverarbeitungssystem zugeordnete Software, die wenigstens einige der Verfahrensschritte des Verfahrens nach dem erfindungsgemäßen Verfahren automatisiert durchführt bzw. automatisiert steuert.

Es wird darauf hingewiesen, dass die Erfindung nicht auf eine bestimmte RFID-Technologie und bestimmte RFID-Protokolle beschränkt ist. Bevorzugt werden bei 13,56 mHz arbeitende RFID-Transponder und Schreib-/Lesegeräte verwendet, und zwar speziell passive RFID-Transponder, die keine darin integrierte Energiequelle benötigen, sondern die benötigte Energie beispielsweise induktiv aus dem durch das Schreib-/Lesegerät generierten Magnetfeld gewinnen. Bevorzugt unterstützen die Schreib-/Lesegeräte mehrere Protokolle, beispielsweise die Protokolle I-CODE und TAG-IT. Es können aber ohne Weiteres auch RFID-Systeme mit anderen Arbeitsfrequenzen, etwa 135 kHz, 400 bis 1000 MHz (UHF-Systeme) und 2450 MHz verwendet werden. Die Kommunikation zwischen dem RFID-Schreib-/Lesegerät und dem jeweiligen RFID-Transponder kann auf einer induktiven Kopplung oder auf einer Kopplung über propagierende elektromagnetische Wellen (Propagationskopplung) beruhen.

Die vorstehenden Angaben sind reine Beispiele. Es können also grundsätzlich alle Frequenzbänder, etwa die Frequenzbänder 100 bis 100 kHz (Niederfrequenz) 10 bis 15 MHz (mittlere Frequenz) und 850 bis 950 MHz, 2,4 bis 5,8 GHz verwendet werden. Ferner können beliebige Modellationsverfahren verwendet werden, wozu nur die Stichworte ASK (amplitude shift keying), FSK (frequency shift keying) und PSK (phase shift keying) genannt werden. Neben den bevorzugten passiven RFID-Transpondern kommt selbstverständlich auch die Verwendung von aktiven Transpondern (TAGS) in Betracht, die eine interne Batterie aufweisen. Die erforderliche Datenspeicherkapazität der RFID-TAGS hängt von der Ausgestaltung des erfindungsgemäßen Verfahrens ab und von der Menge an Daten, die entlang der Logistikkette mitzuführen sind. Beispielsweise kommen Datenspeicherkapazitäten in der Größenordnung von 512 Bit, bevorzugt aber größere Datenspeicherkapazitäten in der Größenordnung von wenigstens 64 KB in Betracht.

Betreffend die Weitergabe von Daten mittels der RFID-TAGS kann jedem Glied der Logistikkette (Transportkette) einschließlich dem Absender ein eigener Speicherbereich im RFID-Transponder zugewiesen sein. Die Daten können beispielsweise nach dem EDIFACT-Standard, oder einem anderen (ggf. auch proprietären) Standard abgespeichert werden.

Die Erfindung wird im Folgenden anhand eines in den Figuren veranschaulichten Ausführungsbeispiels näher erläutert.
- Fig. 1: veranschaulicht die gemäß einem bevorzugten Ausführungsbeispiel entlang einer Logistikkette und zwischen den Gliedern der Logistikkette und einem zugeordneten Management- und Sendungsverfolgungssystem auftretenden Datenflüsse.
- Fig. 2: zeigt symbolhaft ein Packstück, darin enthaltene Objekte und ein RFID-Schreib-/Lesegerät.
- Fig. 3: veranschaulicht einen möglichen Aufbau des Management- und Sendungsverfolgungssystems aus mehreren Teilsystemen, nämlich einem zentralen System und einer Mehrzahl von lokalen Systemen, die über wenigstens ein Kommunikationsnetzwerk miteinander in Datenkommunikationsverbindung stehen oder treten können.
- Fig. 4: veranschaulicht eine mögliche Architektur des zentralen Systems.
- Fig. 5: veranschaulicht eine mögliche Architektur eines lokalen Systems.
- Fig. 6: veranschaulicht einen möglichen Aufbau eines mobilen lokalen Systems, speziell eines Fahrzeugsystems des Management- und Sendungsverfolgungssystems.

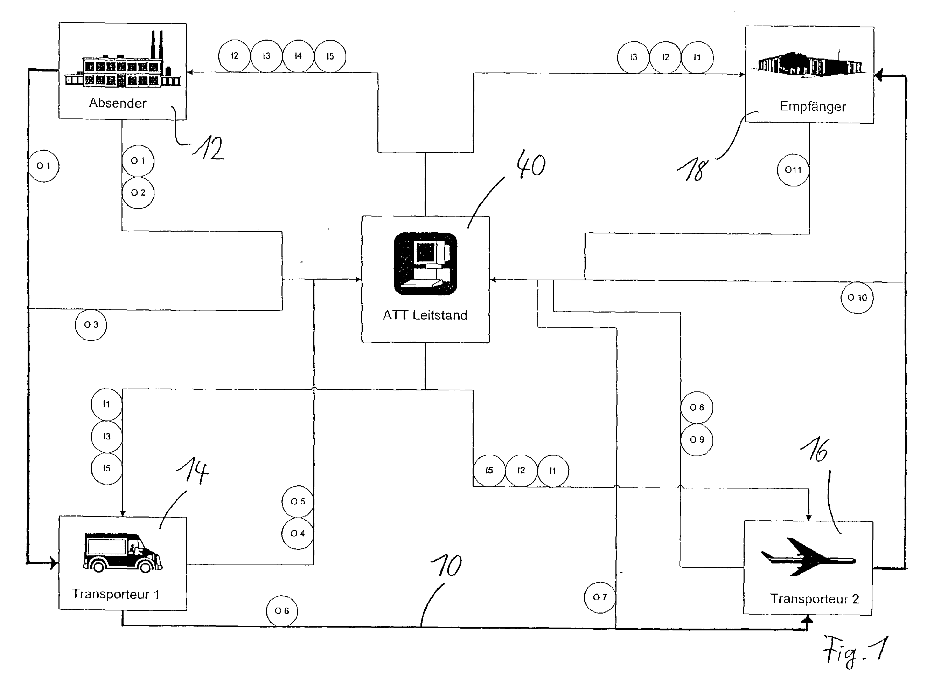

In Fig. 1 ist eine Logistikkette 10 durch einen Absender 12, einen ersten Transporteur (Transporteur 1) 14, einen zweiten Transporteur (Transporteur 2) 16 und einen Empfänger 18 repräsentiert. Wenigstens ein Packstück 20 (Fig. 2) soll vom Absender 12 zum Empfänger 18 geliefert werden. Das Packstück kann mehrere Objekte oder Artikel enthalten, die in Fig. 1b durch zwei Objekte 22 und 24 repräsentiert sind. Der Lieferung des Packstücks 20 an den Empfänger 18 kann ein Vertriebs- oder Lieferauftrag des Absenders 12 selbst oder einer dem Absender 12 übergeordneten Instanz zugrundeliegen. Bei der übergeordneten Instanz kann es sich um den Empfänger selbst oder beispielsweise um eine den Absender und ggf. den Empfänger beauftragende oder steuernde Zentrale handeln. Im Folgenden wird davon ausgegangen, dass der Absender jedenfalls hinsichtlich der hier interessierenden Logistikvorgänge und Datenflüsse von einer ihn steuernden Zentrale unabhängig agiert.

Die Steuerung und Überwachung der entlang der Logistikkette 10 auftretenden Logistikvorgänge (insbesondere umfassend Transportvorgänge, Umschlagvorgänge und Datenkommunikationsvorgänge) erfolgterfindungsgemäß unter Verwendung von sogenannten RFID-Transpondern oder RFID-Tags, die einem jeweiligen Packstück oder gewünschtenfalls einem jeweiligen Objekt zugeordnet sind. Es kann sich beispielsweise um Klebeetiketten mit integrierter RFID-Elektronik handeln. Die Abkürzung RFID steht für Radio Frequency Identification. In Fig. 2 ist das Packstück 20 mit einem RFID-Tag 26 und sind die beiden Objekte 22 und 24 mit einem RFID-Tag 28 bzw. 30 versehen, wobei das Tag 28 in das Objekt 24 integriert, die Tags 26 und 30 hingegen auf dem Packstück 20 bzw. auf dem Objekt 22 angebracht sind.

Erfindungsgemäß werden wiederbeschreibbare Tags verwendet, die mittels RFID-Schreib-/Lesegeräten beschreibbar und auslesbar sind. In Fig. 2 ist ein RFID-Schreib-/Lesegerät 32 symbolhaft dargestellt. Unter der Voraussetzung, dass funktechnische Spezifikationen, insbesondere ein Mindestabstand zwischen dem Schreib-/Lesegerät und dem jeweiligen Tag eingehalten wird und die Tags gegenüber dem Schreib-/Lesegerät nicht funktechnisch abgeschirmt sind, können Tags durch ein Schreib-/Lesegerät ohne "optischen Sichtkontakt" ausgelesen und beschrieben werden. Insbesondere ist es möglich, die den Objekten 22 und 24 zugeordneten Tags 28 und 30 im Inneren des Packstücks 20 auszulesen und zu beschreiben. Gleiches gilt selbstverständlich für ein dem Packstück zugeordnetes Tag, etwa dem Tag 26 der Fig. 2.

Absenderseitig werden das Packstück 20 und ggf. die Objekte 22 und 24 identifizierende Sendungsdaten generiert und im jeweiligen Tag abgespeichert. Als Indentifikation kommt beispielsweise eine Auftragsnummer eines Vertriebsauftrags in Betracht. Die Sendungsdaten werden überdies vom Absender 12 einem Zentralsystem 40 eines Management- und Sendungsverfolgungssystems per elektronische Datenkommunikation übermittelt. Das Zentralsystem kann auch als ATT-System bezeichnet werden, wobei "ATT" für "Active Tracking and Tracing" steht.

Die absenderseitig generierten und vermittels des Tags zum nächsten Glied der Logistikkette, also dem ersten Transporteur 14 (Transporteur 1) übermittelten Sendungsdaten und die an das Zentralsystem 40 übermittelten Sendungsdaten sind in Fig. 1 mit dem Kürzel "Ol" gekennzeichnet, wobei der Buchstabe "O" für "Output" steht, es sich also um Ausgabedaten in Bezug auf den Absender 12 handelt.

Auf Grundlage der erhaltenen Sendungsdaten "Ol" generiert das Zentralsystem 40 Avisierungsdaten für den ersten Transporteur 14, um die Übergabe des Packstücks vom Absender 12 zum ersten Transporteur 14 vorzubereiten. Dieser Datenfluss vom Zentralsystem 40 zum ersten Transporteur 14 ist in Fig. 1 durch "I1" repräsentiert, wobei der Buchstabe "I" für "Input" in Bezug auf das betreffende Glied der Logistikkette steht. Die Avisierungsdaten können beispielsweise die vom Absender 12 dem Zentralsystem 40 übermittelten Sendungsdaten Sendungsdaten "Ol" umfassen.

Der Absender 12 übermittelt ferner Statusdaten "02" an das Zentralsystem 40, ggf. mehrfach in zeitlichen Abständen. Nach der Übergabe des Packstücks 20 vom Absender 12 zum ersten Transporteur 14 umfassen die Statusdaten "O2" insbesondere eine Abholbestätigung POC (POC = Proof of Collection), mit der der Absender 12 dem Zentralsystem 40 bestätigt, dass das Packstück 20 durch den Transporteur 1 abgeholt wurde. Der erste Transporteur 14 quittiert die Übernahme des Packstücks 20, vorzugsweise auf elektronischem Wege durch Übermittlung entsprechender Quittierungsdaten an das Zentralsystem 40. Durch diese Quittierung wird ein Gefahrenübergang dokumentiert. Die entsprechenden Quittierungsdaten sind in Fig. 1 durch "O3" repräsentiert. Das Kürzel "O3" steht für "Transportstatus Abholung" sowie ggf. ferner für weitere Transportstatus-Daten, die beispielsweise etwa auf Grundlage des GPS-Systems generierte Lokalisierungsangaben enthalten, die angeben, wo sich das Packstück bzw. das Objekt bzw. ein Transportmittel des ersten Transporteurs 14 momentan befindet. Von Seiten des ersten Transporteurs 14 werden ferner weitere Statusdaten "O4" und "O5" generiert und an das Zentralsystem 40 übermittelt. Die Statusdaten "O4" und "O5" umfassen insbesondere Ladestatusdaten POT_{load} bzw. POT_{unload}, die angeben, ob ein bestimmtes Packstück bzw. ein bestimmtes Objekt geladen wurde bzw. ist oder entladen wurde bzw. ist.

Der Transporteur 1 kann insbesondere für seine eigene Verwendung eigene, das Packstück bzw. das Objekt identifizierende Sendungsdaten "O6" generieren und diese ins betreffende Tag schreiben. Diese Sendungsdaten werden vom Transporteur 1 etwa zusammen mit den Quittierungsdaten "O3" bzw. den Statusdaten "O4", "O5" an das Zentralsystem 40 übermittelt. Als Identifikation bietet es sich unter Umständen an, die Auftragsnummer eines entsprechenden Speditionsauftrags zu verwenden. Im Tag sind dann sowohl die Sendungsdaten "O1" als auch die Sendungsdaten "O6" abgespeichert. Im Zentralsystem 40 werden die Sendungsdaten "O1" und "O6" einander zugeordnet.

Die Übergabe des Packstücks 20 an den zweiten Transporteur 16 (Transporteur 2) wird wiederum durch den ersten Transporteur 14 an das Zentralsystem 40 bestätigt. Der zweite Transporteur 1 6 generiert Quittierungsdaten und sendet diese zur Dokumentation des Gefahrenübergangs an das Zentralsystem 40 (Daten "O7"). Das Kürzel "O7" kann beispielsweise für "Transportstatus Fernverkehr" stehen, sowie ggf. für weitere Transportstatus-Daten, etwa Lokalisierungsangaben. Vom zweiten Transporteur 16 werden ferner Statusdaten "O8" und "O9" generiert und an das Zentralsystem 40 übermittelt, die insbesondere Ladestatusdaten POT_{load} bzw. POTᵤₙₗ₋ _{oad} umfassen.

Ferner generiert der zweite Transporteur 16 Transportstatusdaten "O1O", die sich auf die Zustellung an den Empfänger beziehen. Die Übergabe des Packstücks 20 lässt sich der zweite Transporteur 16 durch den Empfänger 18 quittieren und der zweite Transporteur 16 übermittelt dann Quittierungsdaten "POD (POD = Proof of Delivery)" an das Zentralsystem 40. Die Quittierungsdaten könnten alternativ oder zusätzlich auch durch den Empfänger 18 generiert und an das Zentralsystem 40 übermittelt werden, im Falle des Ausführungsbeispiels der Fig. 1 als Statusdaten "O11". Die Statusdaten "O11" können noch weitere Informationen betreffend den Logistikstatus des zugestellten Packstücks bzw. der darin enthaltenen Oberseite enthalten.

Vom Zentralsystem 40 werden verschiedene Daten, insbesondere Status- und Avisierungsdaten an die Glieder der Logistikkette übermittelt, etwa die sich auf den Ladestatus in Bezug auf den ersten Transporteur 14 beziehenden, mit "I2" gekennzeichneten Ladestatusdaten POT_{load} bzw. POT_{unload}, die sich auf den Ladestatus in Bezug auf den zweiten Transporteur 16 beziehenden, mit "I3" gekennzeichneten Ladestatusdaten POT_{load} bzw. POT_{unload}, die den Transportstatus und ggf. die Lieferung an den Empfängen mit bestätigenden Daten "I4". Dem Empfänger können ebenfalls Statusdaten bereitgestellt werden, etwa sich auf den Absender beziehende, oder ggf. ein Abholen durch den ersten Transporteur 14 bestätigenden Daten "I1" und die sich auf die Transporteure beziehenden Ladezustandsdaten "I2" und "I3". Es ist auch zweckmäßig, wenn die Transporteure über die reinen Avisierungsdaten hinaus Statusdaten, insbesondere Transportstatus oder/und Ladestatusdaten, bereitgestellt bekommen, etwa der erste Transporteur 14 die sich auf den Absender 12 beziehenden Statusdaten "I1" und die sich auf den zweiten Transporteur 16 beziehenden Ladestatusdaten "I3" und der zweite Transporteur 16 die sich auf den Absender beziehenden Statusdaten "I1" und die sich auf den zweiten Transporteur beziehenden Ladestatusdaten "I2".

Das Zentralsystem 40 kann dafür ausgelegt sein, sich auf Logistikvorgänge entlang der Logistikkette beziehende Soll-Daten und einen tatsächlichen Logistikzustand und tatsächlich erfolgte/erfolgende Logistikvorgänge representierende Ist-Daten zu vergleichen, um eine Abweichungsüberprüfung vorzusehen. Falls gewissen Alarmkriterien genügende Abweichungen festgestellt werden, kann ein entsprechender Alarm an eine interessierte Stelle, beispielsweise an den Absender 12 oder/und einen betroffenen Transporteur, gegeben werden. Die entsprechenden Abweichungsalarmdaten sind in Fig. 1 mit "I5" gekennzeichnet.

Die in Fig. 1 mit "O1" bis "O11" bezeichneten Ausgabe-Daten (Ausgabe in Bezug auf ein Glied der Logistikkette; die ausgegebenen Daten werden dem Zentralsystem 40 eingegeben) und die in Fig. 1 mit "I1" bis "I5" bezeichneten Eingabedaten (Eingabe in Bezug auf ein Glied der Logistikkette; vom Zentralsystem ausgegeben) repräsentieren beispielsweise insbesondere die folgenden Daten:
- O1:: Sendungsdaten
- O2:: Statusdaten Absender POC
- O3:: Transportstatus Abholung
- O4:: Statusdaten POT_{unload}
- O5:: Statusdaten POT_{load}
- O6:: Sendungsdaten erster Transporteur
- O7:: Transportstatus Fernverkehr
- O8:: Statusdaten POT_{unload}
- O9:: Statusdaten POT_{load}
- O1O:: Transportstatus Zustellung
- O11:: Statusdaten Empfänger POD
- I1:: Statusdaten Absender POC
- I2:: Statusdaten POT_{unload}, POT_{load}
- I3:: Statusdaten POT_{unload}, POT_{load}
- I4:: Transportstatus und POD
- I5:: Alert bei Abweichungen

Die Abkürzungen POC, POD und POD stehen für Folgendes:
POC: Proof of Collection (Bestätigung, dass das Packstück abgeholt ist)
POT: Proof of Transfer (Bestätigung, dass das Packstück übergeben ist)
POD: Proof of Delivery (Bestätigung, dass das Packstück abgeliefert wurde)

Die Kennzeichnungen "load" und "unload" bedeuten:
- load =: geladen
- unload =: entladen

Es sollte noch auf Folgendes hingewiesen werden. Gemäß Fig. 1 sind dem zweiten Transporteur 16 keine eigenen Sendungsdaten zugeordnet. Es ist nämlich im Rahmen des erfindungsgemäßen Verfahrens ohne Weiteres möglich, dass die Glieder oder einzelne Glieder der Logistikkette für ihre eigenen Zwecke die von einem vorangehenden Glied der Logistikkette, insbesondere vom Absender verwendeten Sendungsdaten zu verwenden. Selbstverständlich könnte der Transporteur 2 der Fig. 1 auch eigene Sendungsdaten generieren und diese dann einerseits im Tag abspeichern und andererseits an das Zentralsystem 40 übermitteln. Sofern ein Glied der Logistikkette keine eigenen Sendungsdaten generiert, sondern im Tag schon abgespeicherte Sendungsdaten für die eigenen Zwecke verwendet, braucht dieses Glied nicht mit einem Schreib-/Lesegerät ausgerüstet sein, es reicht dann - je nach Erfordernissen - ein Lesegerät. Es ist auch nicht ausgeschlossen, dass ein einzelnes Glied der Logistikkette die RFID-Funktionalitäten der Tags nicht ausnutzt, sondern Barcode-gestützt arbeitet. Beispielsweise könnten Tags in Etikettenform verwendet werden, die einen Barcode-Aufdruck und ggf. einen Klarschrift-Aufdruck aufweisen. Auf diese Weise ist das Management- und Sendungsverfolgungssystem flexibel und offen für verschiedenste Teilnehmer.

Das Management- und Sendungsverfolgungssystem kann grundsätzlich verschiedenste Architekturen aufweisen. Bevorzugt ist eine Architektur mit einem Zentralsystem 40. Es ist aber nicht ausgeschlossen, dass eine Architektur mit mehreren, ggf. in einem Netz verteilten Teilsystemen zum Einsatz kommt, die in Datenkommunikationsverbindung miteinander stehen oder treten können, beispielsweise über Kommunikationsnetzwerke wie Internet, LAN, WAN, ein Intranet usw. Grundsätzlich ist es nicht ausgeschlossen, dass die Teilsysteme auf gleicher Hierarchieebene angesiedelt sind. Bevorzugt ist zwar eine Hierarchie von Systemen mit einem übergeordneten System und einem oder mehreren untergeordneten Systemen.

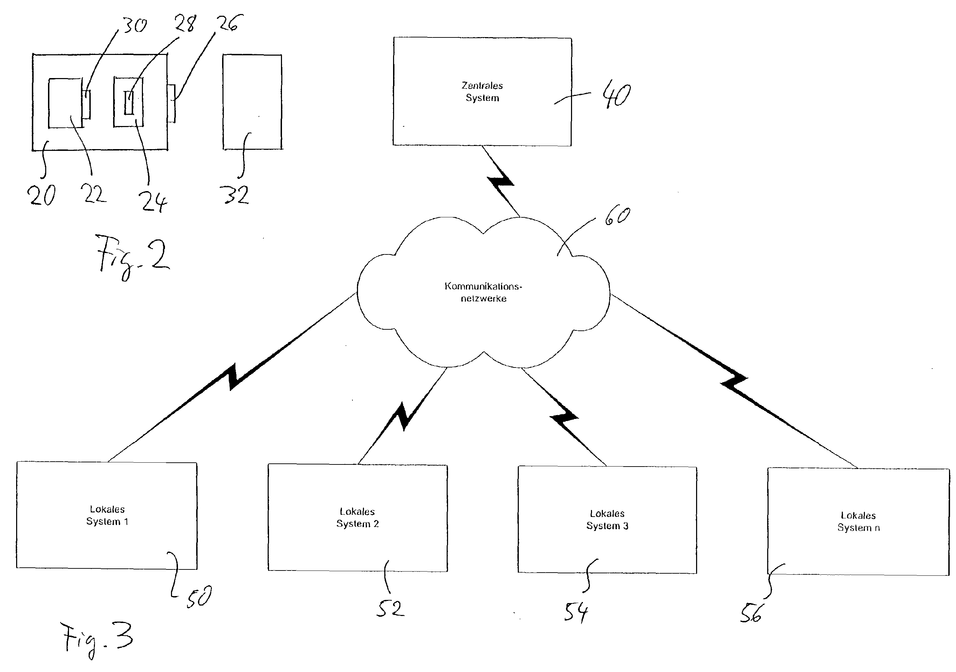

Bevorzugt ist die Architektur der Fig. 3. Hier ist ein zentrales System 40 vorgesehen, das beispielsweise dem Zentralsystem 40 der Fig. 1 entspricht. Das zentrale System 40 ist an wenigstens einem Kommunikationsnetz, etwa dem Internet, einem Intranet, einem LAN, einem WAN usw. angeschlossen.

Das Management- und Sendungsverfolgungssystem umfasst ferner eine Mehrzahl von lokalen Systemen 1 bis n, die in Fig. 3 mit 50, 52, 54 bzw. 56 bezeichnet sind. Zwischen einem jeweiligen lokalen System und dem zentralen System 40 besteht oder kann hergestellt werden eine Datenkommunikationsverbindung, die beispielsweise über wenigstens ein Kommunikationsnetzwerk 60 erfolgt, etwa das Internet, ein Intranet, ein LAN, ein WAN usw. Auch die Herstellung oder das Aufrechterhalten von Datenkommunikationsverbindungen zwischen den lokalen Systemen unabhängig vom zentralen System ist grundsätzlich nicht ausgeschlossen. Die Architektur des Gesamtsystems ist aber einfacher, wenn alle Kommunikation zwischen den lokalen Systemen über das zentrale System verläuft. Lässt man das zentrale System 40 weg und sieht dementsprechend direkte Datenkommunikation zwischen den lokalen Systemen vor, könnte Fig. 2 eine Architektur mit auf gleicher Hierarchieebene verteilten Teilsystemen veranschaulichen.

Bei den lokalen Systemen handelt es sich um einzelnen Gliedern einer Logistikkette zugeordnete Teilsysteme, die etwa die eigenen Sendungsdaten generieren und an das Zentralsystem 40 übermitteln. Bezug nehmend auf die Datenflüsse der Fig. 1 zwischen dem Zentralsystem 40 und den Gliedern der Logistikkette verlaufen diese jeweils vom zentralen System bzw. Zentralsystem 40 über das Kommunikationsnetzwerk 60 zum lokalen System des betreffenden Glieds der Logistikkette bzw. vom lokalen System des betreffenden Glieds der Logistikkette über das Kommunikationsnetzwerk zum zentralen System 40. Die auf Seiten eines Glieds der Logistikkette erfolgende Generation und Übermittlung von Daten kann automatisiert erfolgen. Gleiches gilt für die vom zentralen System 40 an die Glieder der Logistikkette zu übermittelten Daten.

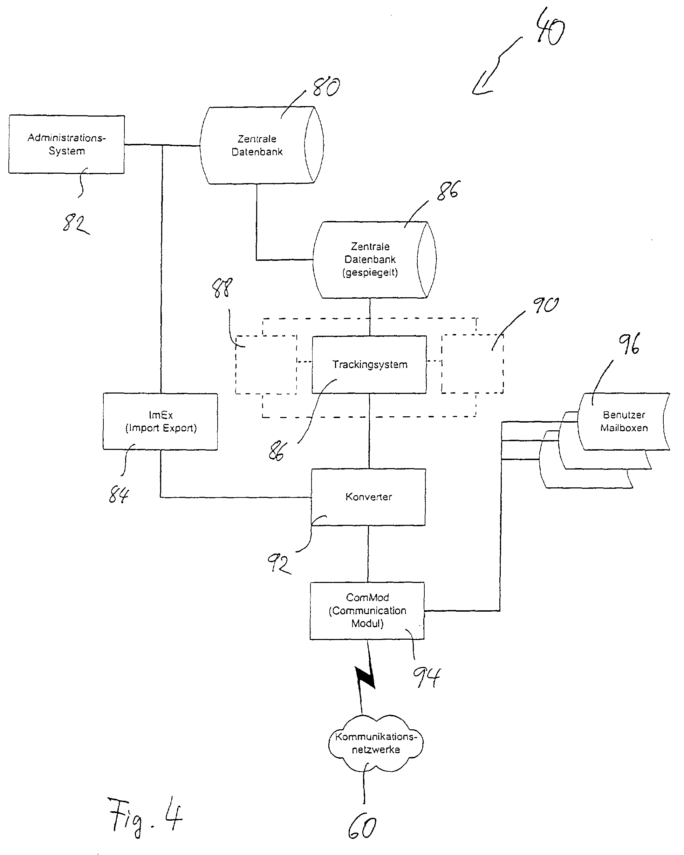

Eine mögliche Architektur des zentralen Systems oder Zentralsystems 40 ist in Fig. 4 veranschaulicht. Eine zentrale Datenbank 80 dient zum Speichern aller Trackinginformationen der gesamten Logistikkette. Die zentrale Datenhaltung sichert den Datenbestand für alle Beteiligten und garantiert eine ständige Datenverfügbarkeit. Durch die zentrale Datenbank kann erreicht werden, dass die Logistikkette für deren Glieder informationstechnisch transparent wird. Es können also nicht nur zwei aufeinanderfolgende Logistikkettenglieder miteinander kommunizieren.

Der zentralen Datenbank kann ein Administrationssystem 82 zugeordnet sein, das insbesondere zur Datenbankverwaltung dient. Ein Import-Export-Modul (kurz: ImEx-Modul) 84 wickelt Eingabe/Ausgabe-Operationen in bzw. aus der zentralen Datenbank ab. Eingehende Daten können verschiedenen Prüfungen unterzogen und dann mit TBN-Adressen ("to be notified", d. h.: zu informieren) versehen werden, um die Weiterleitung von Informationen, insbesondere von Avisierungsdaten, an betroffene Zielsysteme auf einfache Weise zu steuern.

Für eine besonders hohe Performance können alle nur Lesezugriffe auf die Datenbank benötigenden Funktionen über eine duplizierte (gespiegelte) Datenbank 86 abgewickelt werden. Beispielsweise kann das häufig Leseoperationen auf den Datenbestand durchführende Trackingsystem 86 auf der gespiegelten Datenbank 86 arbeiten. Das Trackingsystem stellt beispielsweise Sendungsverfolgungsinformationen bereit, die beispielsweise

über eine Internet-Sendungsauskunft interessierten Partnern, beispielsweise dem Absender oder dem Empfänger der Logistikkette oder einer übergeordneten Instanz auf Anfrage bereitgestellt werden können. Es können entsprechende Informationen aber auch abfrageunabhängig interessierten Partnern zur Verfügung gestellt werden. Weitere, auf der zentralen Datenbank 86 arbeitende und eventuell mit dem Trackingsystem 86 Daten austauschende Teilsysteme sind bei 88 und 90 angedeutet. Ein Beispiel für derartiges System wäre ein die Abweichungsüberwachung durchführendes Teilsystem.

Bevorzugt ist das Management- und Sendungsverfolgungssystem als offenes System konzipiert, so dass die Teilnehmer, insbesondere die Logistikkettenglieder, eigene Datenformate verwenden können. Hierzu kann ein Konverter 92 vorgesehen sein, der die von den Gliedern der Logistikkette übermittelten Daten aus verschiedenen Quellformaten in das Format des Zentralsystems und umgekehrt die an die Glieder der Logistikkette zu übermittelten Daten in ein jeweiliges Zielformat übersetzt. Beispielsweise können Standards wie XML, EDIFACT und Branchenstandards wie FORTRAS, VDA usw. unterstützt werden.

Ein kurz als ComMod-Modul bezeichnetes Kommunikationsmodul 94 stellt die Datenkommunikationsverbindungen zu den Gliedern der Logistikkette bzw. deren lokalen Systemen her, und zwar sowohl auf Netz- als auch auf Protokollebene. Als Netze können Fest- und Funknetze mit analoger Datenübertragung oder digitaler Datenübertragung verwendet werden; es seien die Stichworte ISDN, DxP, GSM, UMTS als Beispiele genannt. Es können im Prinzip beliebige Protokolle verwendet weden, etwa Standards wie X.400, FTP, OFTP und gewünschtenfalls auch proprietäre Protokolle.

Neben einer aktiven Datenzustellung kommt auch der Einsatz von Benutzer-Mailboxen 96 in Betracht, die zur Speicherung der Daten des jeweiligen Partners (Glieds der Logistikkette) dienen. Jeder Teilnehmer kann dann die Datenabholung selbst steuern und somit seine Systemverfügbarkeit eigenverantwortlich regeln. Damit ist eine permanente Verfügbarkeit nicht zwingend.

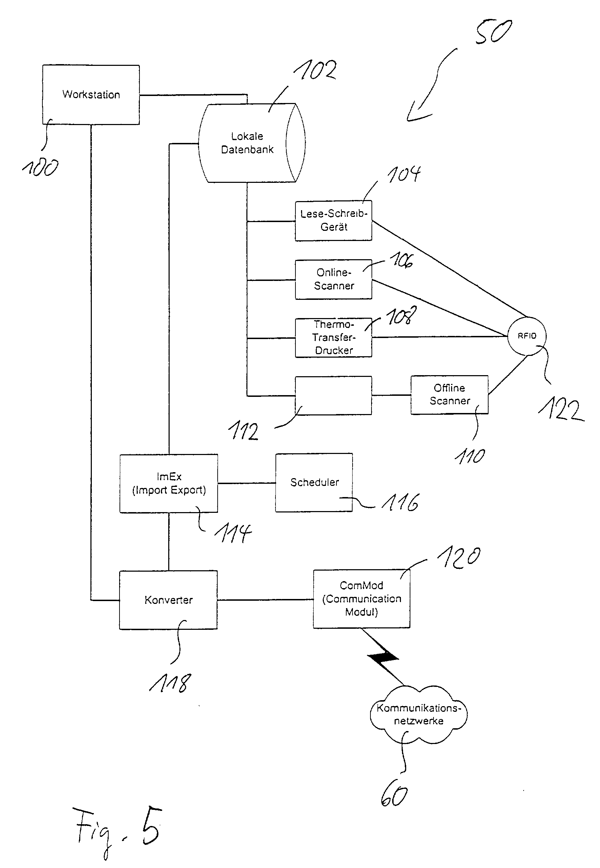

Ein Beispiel für eine Architektur eines lokalen Systems ist in Fig. 5 gezeigt. Eine lokale Workstation 100 kann beispielsweise zur Visualisierung der Sendungsverfolgung, zur Pflege von Stammdaten und zum Management von Abweichungen dienen. Stammdaten sind unter anderem Datenempfänger (TBN) angebende Daten, Fahrzeugdaten, Routen usw. Die Routen können durch Adressen fest installierter Lese-Schreib-Geräte definiert sein. Das Abweichungsmanagement, das auf vorgegebenen Soll-Daten für die Transporte bzw. allgemein Logistikvorgänge (wie Fahrzeug, Zeiten und/oder Strecken) basiert, kann nach dem Ausführungsbeispiel also entweder zentral oder auch lokal durchgeführt werden.

Auch das Lokalsystem kann eine eigene (lokale) Datenbank 102 umfassen, in der neben Trackingdaten verschiedene Stammdaten verwaltet werden können. Zweckmäßig ist, wenn die lokale Datenbank nur eine Teilmenge der in der zentralen Datenbank 86 gehaltenen Daten enthält, so dass lokale Datensicherungsmaßnahmen entfallen können, da die Daten stets in der zentralen Datenbank 86 verfügbar sind. Die lokale Datenbank 102 ermöglicht, dass verschiedene Funktionen des Management- und Sendungsverfolgungssystems im Offline-Betrieb, also ohne Datenkommunikationsverbindung zum Zentralsystem 40, lokal bereitgestellt werden können und dient als Zwischenspeicher zur Speicherung von an das Zentralsystem 40 zu übermittelnden Daten.

Das Lokalsystem kann ferner aufweisen:
- wenigstens ein Schreib-/Lesegerät 104, das Daten aus einem jeweiligen RFID-Transponder 122 ausliest bzw. in diesen Daten schreibt. Es kann ein direkter Zugriff auf die lokale Datenbank 102 vorgesehen sein.
- wenigstens ein ebenfalls Schreib-Lesefunktionalität in Bezug auf RFID-Transponder 122 bietender Online-Scanner, beispielsweise einen Handheld-Scanner. Der Online-Scanner 106 kann ebenfalls direkt auf der Datenbank arbeiten und Sonderfunktionen betreffend den Status von Packstücken bzw. Objekten (etwa "beschädigt" oder "Hallensturz") bieten.
- wenigstens ein Drucker, beispielsweise Thermo-Transfer-Drucker 108 zum Drucken von Barcode-Etiketten mit integriertem RFID-Transponder. Vorzugsweise hat der Drucker gleichzeitig Schreib-Funktionalität, so dass der Transponder während des Druckens bereits beschrieben werden kann.
- wenigstens einen Offline-Scanner 110, der im Gegensatz zum Schreib-/Lesegerät 104 und zum Online-Scanner 106 lokale Intelligenz aufweist und unabhängig von dem die Workstation und die lokale Datenbank umfassenden Server arbeiten kann. Der Offline-Scanner kann insbesondere als sogenannter "Batch-Scanner" dienen. Die Kommunikation zwischen dem Offline-Scanner 110 und dem Server erfolgt über eine geeignete Schnittstelle 112.

Ein ImEx-Modul 114 steuert den Datenimport in die lokale Datenbank 102 und den Export von Daten aus der lokalen Datenbank 102. In diesem Zusammenhang werden die erforderlichen Datenbankoperationen und die Datenverteilung gesteuert. Es kann eine Funktionalität vorgesehen sein, die erkennt, ob es sich bei einer Nachricht (bei bestimmten Daten) um eine Initialisierung oder um eine Ergänzung handelt. In der Abhängigkeit hiervon kann dann über das ImEx-Modul 84 des Zentralsystems 40 die zentrale Datenbank 80 beschickt werden. Es kann ein Scheduler 116 vorgesehen sein, um das ImEx-Modul 114 nach einem vorbestimmten Zeit- oder/und Ereignisschema zu steuern. Insbesondere kann vorbestimmt sein, wann Daten an das zentrale System 40 versendet werden sollen oder/und wann Daten von dem Zentralsystem 40 abgeholt werden sollen. Der Scheduler 116 kann auch dafür sorgen, dass die lokale Datenbank regelmäßig darauf überprüft wird, ob neue Daten zum Versand an das Zentralsystem 40 vorliegen. Unter der Steuerung des Schedulers kann dann ein entsprechender Prozess initialisiert werden.

Aufgrund des Konverters 92 des Zentralsystems 40 braucht das lokale System 50 an und für sich keinen eigenen Konverter zur Formatkonvertierung aufweisen. Ein derartiger Konverter 118 kann aber für Datenaustauschbeziehungen mit anderen Systemen, etwa mit einem anderen lokalen System, vorgesehen sein.

Ähnlich wie das Zentralsystem der Fig. 4 weist das lokale System 50 ein Kommunikationsmodul 120 auf für die Datenkommunikation über wenigstens ein Kommunikationsnetzwerk 60. Auf die Erläuterungen zum Kommunikationsmodul 94 wird verwiesen.

Bei einem mit einem der Geräte 104, 106, 108 und 110 in Schreib- bzw. Lese-Beziehung tretenden RFID-Transponder 122 kann es sich um einen einem Packstück oder einem (in einem Packstück aufgenommenen oder aufzunehmenden) Objekt zugeordneten oder zuzuordnenden Transponder handeln. Ist nicht nur eine Packstück-Verfolgung, sondern auch eine Objekt-Verfolgung gewünscht, wird es in der Regel zweckmäßig sein, zu verfolgende Objekte mit eigenem RFID-Transponder zu versehen.

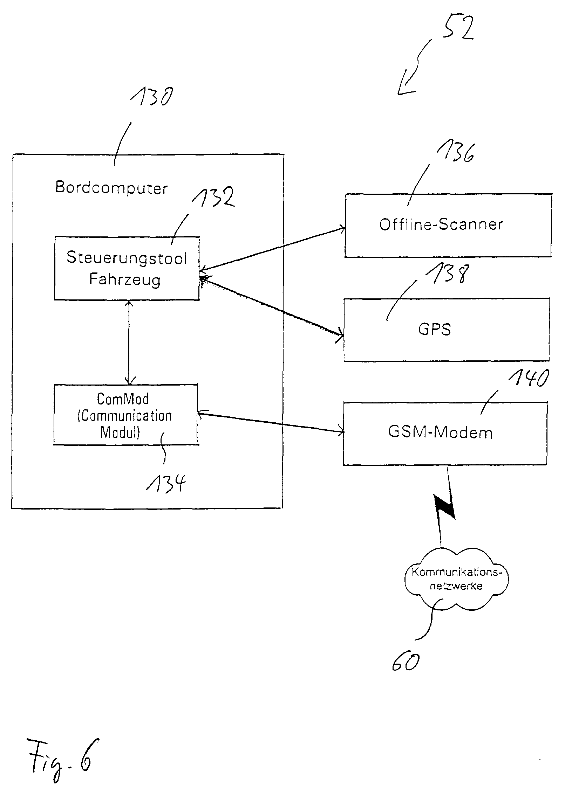

Ein weiteres lokales System, das beispielsweise als eines der lokalen Systeme der Fig. 3 identifiziert werden kann, ist in Fig. 6 gezeigt. Es handelt sich um ein lokales System ohne eigene Datenbank, das im Offline-Betrieb oder/und in Datenkommunikationsverbindung mit dem Zentralsystem 40 oder/und einem lokalen System entsprechend dem lokalen System der Fig. 5 arbeitet. In Fig. 6 ist davon ausgegangen, dass es sich um ein an Bord eines Transportmittels, insbesondere eines Kraftfahrzeugs befindendes System handelt, das einen Bordcomputer 130 mit einer Steuerungseinheit 132 für das Fahrzeug und einem Kommunikationsmodul 134 aufweist. Ein Offline-Scanner 136 dient zum Auslesen von RFID-Transpondern. Gewünschtenfalls kann der Offline-Scanner auch eine Schreib-Funktionalität aufweisen, etwa wenn eigene Sendungsdaten verwendet werden. Über eine GPS-Einheit ist eine Positionsbestimmung des Fahrzeugs und damit der von diesen transportierten Packstücke möglich. Hierdurch wird eine Sendungsverfolgung im geographischen Sinne möglich. Die Kommunikation mit einem zugeordneten System, etwa dem Zentralsystem 40 oder einem lokalen System entsprechend Fig. 4 kann beispielsweise über ein GSM-Modem 140 erfolgen.

Zusammenfassend betrifft die Erfindung ein Verfahren und ein System zum Management von zwischen Gliedern einer Logistikkette stattfindenden Logistikvorgängen und zur eine Packstückverfolgung und gewünschtenfalls eine Objektverfolgung umfassenden Sendungsverfolgung entlang der Logistikkette. Erfindungsgemäß ist die Verwendung von wiederholt beschreibbaren RFID-Transpondern vorgesehen, die mittels zugeordneten RFID-Schreib-/Lesegeräten ausgelesen und beschrieben werden. Auf Grundlage von Avisierungsdaten und aus einem jeweiligen RFID-Transponder ausgelesenen Daten werden Logistikvorgänge bestätigt und quittiert.

## Patentansprüche

1. Verfahren zum Management von zwischen Gliedern (12, 14, 16, 18) einer Logistikkette (10) stattfindenden Logistikvorgängen und zur eine Packstückverfolgung und gewünschtenfalls eine Objektverfolgung umfassenden Sendungsverfolgung entlang der Logistikkette (10), umfassend:
a) Bereitstellen, in Zuordnung zu wenigstens einem Glied der Logistikkette, wenigstens eines RFID-Schreib-/Lesegeräts (32) zum Auslesen und Beschreiben von zugeordneten RFID-Transpondern (26, 28, 30);
b) Bereitstellen wenigstens eines wiederholt beschreibbaren RFID-Transponders (26, 28, 30) in Zuordnung zu wenigstens einem Packstück (20) oder/und zu wenigstens einem Objekt (22, 24) des Packstücks;
c) in Zuordnung zu einem ersten Glied der Logistikkette oder/und zu einer dem ersten Glied übergeordneten Instanz oder in gemeinsamer Zuordnung zum ersten und zweiten Glied der Logistikkette:
ca) Generieren von dem Packstück bzw. dem Objekt zugeordneten Daten umfassend 1) Packstück- oder/und Objektdaten (im Folgenden Sendungsdaten genannt), die das Packstück bzw. das Objekt identifizieren, 2) gewünschtenfalls Statusdaten, die einen momentanen Logistikstatus des Packstücks bzw. des Objekts angeben, und gewünschtenfalls 3) Logistikkettendaten, die von der Logistikkette wenigstens das letzte Glied und vorzugsweise auch das auf das erste Glied folgende nächste Glied identifizieren, und 4) gewünschtenfalls andere Daten, die entlang der Logistikkette mitzuführen sind;
cb) Abspeichern wenigstens 1) der Sendungsdaten und, sofern vorhanden, 2) der anderen Daten in dem dem Packstück bzw. dem Objekt zugeordneten RFID-Transponder (26, 28, 30);
cc) Aufnehmen wenigstens 1) der Sendungsdaten, und, sofern vorhanden, 2) der Statusdaten und, sofern vorhanden, 3) der Logistikkettendaten in einen Datenbestand eines Datenverarbeitungssystems (40);
cd) Übergeben, durch das erste Glied (12), des Packstücks (20) bzw. des Objekts (22, 24) an das nächste Glied (14) der Logistikkette (10);
d) in Zuordnung zu jedem folgenden Glied der Logistikkette mit Ausnahme des letzten Glieds:
da) Übernehmen, durch das folgende Glied (14; 16), des Packstücks (20) bzw. des Objekts (22, 24) vom vorangehenden Glied (12; 14) der Logistikkette;
db) Auslesen wenigstens von Sendungsdaten aus dem RFID-Transponder (26, 28, 30);
dc) Generieren von dem Packstück bzw. dem Objekt zugeordneten Daten umfassend 1) Quittierungsdaten, die die Übernahme des Packstücks bzw. des Objekts quittieren, 2) gewünschtenfalls Statusdaten, die einen momentanen Logistikstatus des Packstücks bzw. des Objekts angeben, 3) gewünschtenfalls eigene Packstück-oder/und Objektdaten (im Folgenden eigene Sendungsdaten genannt), die das Packstück bzw. das Objekt identifizieren, 4) gewünschtenfalls Logistikkettendaten, die von der Logistikkette wenigstens das nächste Glied identifizieren, und 5) gewünschtenfalls andere Daten, die entlang der Logistikkette mitzuführen sind;
de) Abspeichern wenigstens, sofern vorhanden, 1) der eigenen Sendungsdaten und, sofern vorhanden, 2) der anderen Daten in dem dem Packstück bzw. dem Objekt zugeordneten RFID-Transponder;
df) Aufnehmen wenigstens 1) der Quittierungsdaten und, sofern vorhanden, 2) der Statusdaten und, sofern vorhanden, 3) der eigenen Sendungsdaten und, sofern vorhanden, 4) der Logistikkettendaten in den Datenbestand des Datenverarbeitungssystems (40);
dg) Übergeben, durch das betreffende Glied (14; 16), des Packstücks bzw. des Objekts an das nächste Glied (16; 18) der Logistikkette (10);
e) in Zuordnung zum letzten Glied (18) der Logistikkette (10) oder in gemeinsamer Zuordnung zum letzen und vorletzten Glied der Logistikkette:
ea) Übernehmen, durch das letzte Glied (18), des Packstücks bzw. des Objekts vom vorletzten Glied (16) der Logistikkette;
eb) Auslesen wenigstens von Sendungsdaten aus dem RFID-Transponder (26, 28, 30);
ec) Generieren von dem Packstück bzw. dem Objekt zugeordneten Daten umfassend 1) Quittierungsdaten, die die Übernahme des Packstücks bzw. des Objekts quittieren, und 2) gewünschtenfalls Statusdaten, die einen momentanen Logistikstatus des Packstücks (20) bzw. des Objekts (22, 24) angeben;
ed) Aufnehmen wenigstens 1) der Quittierungsdaten und, sofern vorhanden, 2) der Statusdaten in den Datenbestand des Datenverarbeitungssystems;
f) durch das Datenverarbeitungssystem (40):
fa) Halten der 1) Sendungsdaten, 2) Quittierungsdaten, 3) gegebenenfalls Statusdaten und 4) gegebenenfalls Logistikkettendaten;
fb) sofern verschiedene Glieder der Logistikkette jeweils eigene Sendungsdaten verwenden: Zuordnen von sich auf das gleiche Packstück bzw. das gleiche Objekt beziehenden Sendungsdaten zueinander;
fc) auf Grundlage wenigstens der Sendungsdaten: Bereitstellen von Avisierungsdaten, die wenigstens ein Packstück (20) oder/und wenigstens ein Objekt (22, 24) des Packstücks identifizieren und wenigstens einen sich hierauf beziehenden Logistikvorgang ankündigen, für wenigstens ein Glied der Logistikkette;
fd) auf Grundlage der Sendungsdaten sowie auf Grundlage der Quittierungsdaten oder/und der Statusdaten: 1) Bereitstellen von Bestätigungsdaten, die wenigstens ein Packstück (20) oder/und wenigstens ein Objekt (22, 24) des Packstücks identifizieren und für wenigstens einen sich hierauf beziehenden Logistikvorgang bestätigen, dass dieser erfolgt ist, wenigstens für das erste Glied der Logistikkette oder/und die übergeordnete Instanz.

2. Verfahren nach Anspruch 1, **dadurch gekennzeichnet, dass** das Datenverarbeitungssystem (40) auf Grundlage von vom Datenverarbeitungssystem gehaltenen Daten selbsttätig oder/und in Antwort auf eine vermittels technischer Datenkommunikation erfolgende Anfrage Sendungsverfolgungsdaten bereitstellt, die einen momentanen Logistikstatus wenigstens eines Packstücks (20) oder/und wenigstens eines Objekts (22, 24) angeben.

3. Verfahren nach Anspruch 1 oder 2, **dadurch gekennzeichnet, dass** von dem Datenverarbeitungssystem (40) einem Glied der Logistikkette (im Folgenden das erstgenannte Glied) ein Objekt bzw. ein Packstück identifizierende Identifikationsdaten bereitgestellt werden, die die Sendungsdaten wenigstens eines vorangehenden Glieds oder/und der übergeordneten Instanz sowie gewünschtenfalls eine dieses vorangehende Glied bzw. die übergeordnete Instanz identifizierende Identifikation umfassen, und dass in Zuordnung zu dem erstgenannten Glied aus wenigstens einem RFID-Transponder Sendungsdaten ausgelesen und mit den Identifikationsdaten verglichen werden und in dem Fall, dass die ausgelesenen Sendungsdaten den Identifikationsdaten entsprechen, in Bezug auf das dem RFID-Transponder zugeordnete Packstück bzw. Objekt Quittierungsdaten und gewünschtenfalls eigene Sendungsdaten generiert werden.

4. Verfahren nach einem der vorhergehenden Ansprüche, **dadurch gekennzeichnet, dass** der Logistikstatus des Packstücks bzw. des Objekts umfasst:
- eine Übergabebestätigung eines Glieds der Logistikkette, die bestätigt, dass das Packstück bzw. das Objekt an das nächste Glied der Logistikkette übergeben wurde, oder/und
- eine Ladezustandsangabe, die angibt, ob das Packstück bzw. das Objekt auf ein Transportmittel geladen oder von diesem entladen wurde, oder/und
- eine Lokalisierungsangabe, die angibt, wo sich das Packstück bzw. das Objekt bzw. ein zugeordnetes Transportmittel momentan befindet.

5. Verfahren nach einem der vorhergehenden Ansprüche, **dadurch gekennzeichnet, dass** für wenigstens ein Objekt (24) der diesem Objekt zugeordnete RFID-Transponder (28) in dieses Objekt integriert ist.

6. Verfahren nach einem der vorhergehenden Ansprüche, **dadurch gekennzeichnet, dass** für wenigstens ein Packstück der diesem Packstück zugeordnete RFID-Transponder in ein dem Packstück zugeordnetes Lademittel, vorzugsweise in einen das Packstück aufnehmenden Behälter, integriert ist.

7. Verfahren nach einem der vorhergehenden Ansprüche, **dadurch gekennzeichnet, dass** in Klebeetiketten integrierte RFID-Transponder verwendet werden.

8. Verfahren nach einem der vorhergehenden Ansprüche, **dadurch gekennzeichnet, dass** eine Ladehierarchie unterstützt wird, bei der eine Mehrzahl von Einheiten einer niedrigeren Ladehierarchie eine Einheit einer höheren Ladehierarchie bildet, wobei den Einheiten niedrigerer Ladehierarchie jeweils gesonderte RFID-Transponder zugeordnet sein können, die individuell im Sinne eines Auslesens oder/und Beschreibens ansprechbar sind, und wobei der Einheit höherer Ladehierarchie zusätzlich ein eigener RFID-Transponder zugeordnet sein kann, der individuell im Sinne eines Auslesens oder/und Beschreibens ansprechbar ist.

9. Verfahren nach einem der vorhergehenden Ansprüche, **dadurch gekennzeichnet, dass** wenigstens ein Packstück (20) mehrere Objekte (20, 24) enthält, wobei von den Objekten des jeweiligen Packstücks mehreren jeweils ein gesonderter RFID-Transponder (28, 30) zugeordnet ist, die individuell im Sinne eines Auslesens oder/und Beschreibens ansprechbar sind, wobei vorzugsweise dem die Objekte enthaltenden Packstück (20) als Ganzem zusätzlich ein eigener RFID-Transponder (26) zugeordnet ist, der individuell im Sinne eines Auslesens oder/und Beschreibens ansprechbar ist.

10. Verfahren nach Anspruch 8 und 9, **dadurch gekennzeichnet, dass** neben der hierarchisch niedrigsten Ladehierarchie 3Objekt" und der Ladehierarchie "Packstück" wenigstens eine weitere Ladehierarchie unterstützt wird, die hierarchisch zwischen der Ladehierarchie "Objekt" und der Ladehierarchie "Packstück" liegt oder/und wenigstens eine weitere Ladehierarchie unterstützt wird, die hierarchisch über der Ladehierarchie "Packstück" liegt.

11. Verfahren nach einem der vorhergehenden Ansprüche, **dadurch gekennzeichnet, dass** die RFID-Schreib-/Lesegeräte (32) aus RFID-Transpondern ausgelesene Daten oder/und auf Grundlage dieser Daten generierte Daten per technischer Datenkommunikation an das Datenverarbeitungssystem übermitteln bzw. per technischer Datenkommunikation von dem Datenverarbeitungssystem in RFID-Transponder zu schreibende Daten empfangen.

12. Verfahren nach einem der vorhergehenden Ansprüche, **dadurch gekennzeichnet, dass** das Datenverarbeitungssystem ein Netz von Datenverarbeitungsanlagen (40, 50, 52, 54, 56) umfasst.

13. Verfahren nach einem der vorhergehenden Ansprüche, **dadurch gekennzeichnet, dass** das Datenverarbeitungssystem eine zentrale Datenverarbeitungsanlage (40) und gewünschtenfalls eine Mehrzahl von lokalen, einem jeweiligen Glied der Logistikkette zugeordneten Datenverarbeitungsanlagen (50, 52, 54, 56) umfasst.

14. Verfahren nach Anspruch 13, **dadurch gekennzeichnet, dass** der Datenbestand (80) von der zentralen Datenverarbeitungsanlage (40) gehalten wird und die in den Datenbestand aufzunehmenden Daten vermittels technischer Datenkommunikation an die zentrale Datenverarbeitungsanlage (40) übermittelt werden und von dieser empfangen werden.

15. Verfahren nach Anspruch 14, **dadurch gekennzeichnet, dass** wenigstens ein Teil der Daten von wenigstens einer lokalen Datenverarbeitungsanlage (50), die mit wenigstens einem RFID-Schreib-/Lesegerät (104, 106, 108, 110) in Datenkommunikationsverbindung steht, an die zentrale Datenverarbeitungsanlage (40) übermittelt wird und von dieser empfangen wird.

16. Verfahren nach Anspruch 14 oder 15, **dadurch gekennzeichnet, dass** wenigstens ein Teil der Daten von wenigstens einem mit der zentralen Datenverarbeitungsanlage in Datenkommunikationsverbindung stehenden RFID-Schreib-/Lesegerät (136) unmittelbar an die zentrale Datenverarbeitungsanlage (40) übermittelt wird und von dieser empfangen wird.

17. Verfahren nach einem der Ansprüche 14 bis 16, **dadurch gekennzeichnet, dass** die zentrale Datenverarbeitungsanlage (40) die Avisierungsdaten, die Bestätigungsdaten und gegebenenfalls die Sendungsverfolgungsdaten vermittels technischer Datenkommunikation an eine lokale Datenverarbeitungsanlage (50) oder eine lokale Informationseinheit übermittelt, die diese Daten empfängt und gegebenenfalls anzeigt oder/und ausdruckt.

18. Verfahren nach einem der vorhergehenden Ansprüche, **dadurch gekennzeichnet, dass** von den Generierungsschritten ca), dc), ec), den Abspeicherschritten cb), de), den gegebenenfalls eine Datenübermittlung und einen Datenempfang umfassenden Aufnahmeschritten cc), df), ed) und den Ausleseschritten db), eb) wenigstens einige, vorzugsweise alle automatisiert durchgeführt werden, betreffend die Auslese- und Abspeicherschritte erforderlichenfalls unter manueller Herstellung einer räumlichen Beziehung zwischen einem Schreib-/Lesegerät und einem betreffenden RFID-Transponder entsprechend funktechnischen Spezifikationen derselben.

19. Verfahren nach einem der vorhergehenden Ansprüche, **dadurch gekennzeichnet, dass** der Zuordnungsschritt fb), die Bereitstellungsschritte fc), fd) und die gegebenenfalls eine Datenübermittlung und einen Datenempfang umfassende Bereitstellung von Sendungsverfolgungsdaten automatisiert durchgeführt werden.

20. Verfahren nach einem der vorhergehenden Ansprüche, **gekennzeichnet durch** einen vom Datenverarbeitungssystem (40) automatisiert durchgeführten Vergleich von vorausgehend generierten, geplante Logistikvorgänge entlang der Logistikkette repräsentierenden Soll-Daten und einen tatsächlichen Logistikzustand und tatsächlich erfolgende Logistikvorgänge repräsentierenden Ist-Daten.

21. Verfahren nach Anspruch 20, **dadurch gekennzeichnet, dass** im Falle einer eine vorgegebene Toleranzschwelle übersteigenden Abweichung zwischen den Soll-Daten und den Ist-Daten automatisiert eine Alarmmeldung generiert oder/und automatisiert eine Abhilfemaßnahme vorgeschlagen oder initiiert wird.

22. Verfahren nach einem der vorhergehenden Ansprüche, **dadurch gekennzeichnet**, das Barcode-Identifizierungen unterstützt werden.

23. Verwendung eines einem Packstück (20) oder einem Objekt (22, 24) zugeordneten RFID-Transponders (26, 28, 30) durch das letzte Glied (18) einer nach dem Verfahren eines der Ansprüche 1 bis 22 gemanagten Logistikkette (10) für das Management einer weiteren Logistikkette in Bezug auf das gleiche Packstück (20) oder das gleiche Objekt (22, 24), wobei das Management der weiteren Logistikkette nach dem Verfahren nach einem der vorangehenden Ansprüche erfolgt und wobei das letzte Glied (18) der erstgenannten Logistikkette das erste Glied der weiteren Logistikkette ist.

24. Verwendung eines einem Packstück (20) oder einem Objekt (22, 24) zugeordneten RFID-Transponders (26, 28, 30) durch ein Glied, ggf. das letzte Glied (18) einer nach dem Verfahren eines der Ansprüche 1 bis 22 gemanagten Logistikkette (10) für Lagerhaltungszwecke in Bezug auf das gleiche Packstück (20) oder das gleiche Objekt (26, 28, 30), gewünschtenfalls in Anschluss an die Verwendung nach Anspruch 23 oder dieser Verwendung vorausgehend.

25. Verwendung eines einem Objekt (24) zugeordneten, in dieses Objekt integrierten RFID-Transponders (28) durch das erste (12) oder letzte (18) Glied oder durch die übergeordnete Instanz einer nach dem Verfahren eines der Ansprüche 1 bis 22 gemanagten Logistikkette (10) für die Überwachung des Lebenszyklus des Objekts (24), vorzugsweise im Hinblick auf Qualitätsmanagement oder/und Garantiemanagement, gewünschtenfalls in Anschluß an die Verwendung nach Anspruch 23 oder 24.

26. System zum Management von zwischen Gliedern einer Logistikkette stattfindenden Logistikvorgängen und zur eine Packstückverfolgung und gewünschtenfalls eine Objektverfolgung umfassenden Sendungsverfolgung entlang der Logistikkette nach dem Verfahren nach einem der Ansprüche 1 bis 22, umfassend:
- ein wenigstens eine Datenverarbeitungsanlage (40, 50, 52, 54, 56) umfassendes Datenverarbeitungssystem;
- wenigstens ein RFID-Schreib-/Lesegerät (32), das mit dem Datenverarbeitungssystem in Datenkommunikationsverbindung steht;
- wenigstens einen dem RFID-Schreib-/Lesegerät zugeordneten RFID-Transponder (26, 28, 30), der mittels dem RFID-Schreib/Lesegerät (32) auslesbar und beschreibbar ist;
- dem Datenverarbeitungssystem zugeordnete Software, die wenigstens einige der Verfahrensschritte des Verfahrens nach einem der Ansprüche 1 bis 22 automatisiert durchführt bzw. automatisiert steuert.
